(19) Europäisches Patentamt
European Patent Office
Office européen des brevets

(11) **EP 3 846 027 A1**

(12) **EUROPEAN PATENT APPLICATION**
published in accordance with Art. 153(4) EPC

(43) Date of publication:
**07.07.2021 Bulletin 2021/27**

(51) Int Cl.:
**G06F 9/46** (2006.01)

(21) Application number: **19865102.8**

(22) Date of filing: **15.07.2019**

(86) International application number:
**PCT/CN2019/095996**

(87) International publication number:
**WO 2020/063041 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **29.09.2018 CN 201811147261**

(71) Applicant: **GUANGDONG OPPO MOBILE TELECOMMUNICATIONS CORP., LTD.**
**Dongguan Guangdong 523860 (CN)**

(72) Inventor: **CUI, Xiaogang**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **METHOD AND APPARATUS FOR SCHEDULING MULTI-CORE PROCESSOR, AND TERMINAL AND STORAGE MEDIUM**

(57) Disclosed are a method and apparatus for scheduling a multi-core processor, and a terminal, wherein same belong to the technical field of electronics. The method comprises: taking a process that contributes the most load to a multi-core processor in processes operated by a terminal to serve as a target process; according to invoking information of a second-type core by the target process, obtaining, by means of calculation, a first load of the second-type core during the operation of the target process; when the first load exceeds a load threshold value, obtaining, by means of calculation and according to the first load, a first number of first-type cores needing to be enabled; and enabling the first number of first-type cores. According to the present application, the first load of the second-type core during the operation of the target process is obtained by means of calculation, and whether to enable a first-type core and the first number of first-type cores needing to be enabled are determined according to the first load; and since the first load is obtained by means of calculation based on the target process, the problem in the relevant art of a relatively high power consumption caused by determining, based on the total load of multiple processes in operation, whether to enable the first-type core to be inaccurate in some scenarios is solved.

in the processes running on the terminal, taking the process with the highest contribution to the load of the multi-core processor as the target process — 501

calculating according to the call information of the target process to the second-type core, to obtain a first load of running the target process by the second-type core — 502

calculating according to the first load when the first load exceeds the load threshold, to obtain a first number of the first-type core that need to be turn on — 503

turning on the first-type core of the first number, and turning off the second-type core — 504

FIG. 5

**Description**

**CROSS-REFERENCE TO RELATED APPLICATIONS**

The present disclosure claims priority of Chinese Patent Application No. 201811147261.0, with the title of "METHOD FOR SCHEDULING MULTI-CORE PROCESSOR, APPARATUS, AND TERMINAL", filed on September 29, 2018 by GUANGDONG OPPO MOBILE TELECOMMUNICATIONS CORP., LTD. The entire contents of which are hereby incorporated by reference.

**TECHNICAL FIELD**

The present application relates to electronic technology, and in particular to a method for scheduling a multi-core processor, a device, a terminal, and a storage medium.

**BACKGROUND**

A multi-core processor refers to a central processing unit (CPU) that integrates at least two processing cores in a single process. The multi-core processor supports multiple processing cores on a system bus, and a bus controller provides all bus control signals and command signals.

Hot-plugging of a multi-core processor refers to a process in which a terminal awakens the processing cores of the multi-core processor from the sleep state and enters the working state; and/or, a process in which the processing cores enter the sleep state from the working state. The terminal can allow a portion of the processing cores to be in the sleep state by the hot-plugging, thereby reducing the power consumption of the multi-core processor.

A multi-core processor can include processing cores with different computing abilities. For example, an eight-core processor includes four first-type cores of British ARM company's A15 model and four second-type cores of British ARM company's A7 model. The computing ability of the first-type core of the A15 model is stronger than that of the second-type core of the A7 model.

**SUMMARY OF THE DISCLOSURE**

The present application provides a method for scheduling a multi-core processor, a device, a terminal, and a storage medium. The technical solution is as follows.

In a first aspect, the present application provides a method for scheduling a multi-core processor, and the method is executed by a terminal. The terminal includes the multi-core processor. The multi-core processor includes at least two processing cores. The processing core includes a first-type core and a second-type core. The computing ability of the first-type core is strong than the first-type core. At least one processing is run in the terminal. The method includes the following operations: taking the process with the highest contribution to the load of the multi-core processor as the target process; calculating according to the call information of the target process to the second-type core, to obtain a first load of running the target process by the second-type core; calculating according to the first load when the first load exceeds a load threshold, to obtain a first number of the first-type core that need to be turned on; and turning on the first-type core of the first number, and turning off the second-type core.

In a second aspect, an embodiment of the present application provides a device for scheduling the multi-core processor. The device is applied to a terminal. The terminal includes the multi-core processor. The multi-core processor includes at least two processing cores. The processing core includes a first-type core and a second-type core, the computing ability of the first-type core is stronger than the first-type core, at least one process runs in the terminal, and the device includes: a processing module configured to take the highest contribution to the load of the multi-core processor among the processes as the target process; a calculation module configured to calculate according to the call information of the target process to the second-type core, to obtain the first load of running the target process by the second-type core; and calculate according to the first load when the first load exceeds the load threshold, to obtain the first number of the first-type core that need to be turned on; the processing module is further configured to turn on the first-type core of the first number and turn off the second-type core.

In a third aspect, an embodiment of the present application provides a terminal, wherein the terminal includes a processor and a memory; the memory stores at least one instruction, and the at least one instruction is configured to be executed by the processor to implement the method for scheduling the multi-core processor as described above.

In a fourth aspect, an embodiment of the present application provides a computer-readable storage medium, wherein the storage medium stores at least one instruction, and the at least one instruction is used to be executed by the processor to implement the method for scheduling the multi-core processor as described above.

**BRIEF DESCRIPTION OF THE DRAWINGS**

FIG. 1 is a schematic structural diagram of a terminal provided by an embodiment of the present application;
FIG. 2 is another schematic structural diagram of a terminal provided by an embodiment of the present application;
FIG. 3 is a schematic diagram of an interaction process between a application layer and a Linux kernel layer in a terminal;
FIG. 4 is a schematic structural diagram of a terminal provided by another embodiment of the present application;
FIG. 5 is a flowchart of a method for scheduling a multi-core processor provided by an embodiment of the present application;
FIG. 6 is another flowchart of a method for scheduling a multi-core processor provided by an embodiment of the present application;
FIG. 7 is a structural block diagram of a device for scheduling a multi-core processor provided by an embodiment of the present application.

**DETAILED DESCRIPTION**

The present disclosure will be described below with reference to the drawings and examples. For convenience of description, only parts related to the present disclosure are shown in the drawings instead of all structures.

In the related art, the method for scheduling a multi-core processor includes the following operations: the terminal obtains the total load of the multi-core processor, and when the total load of the multi-core processor is greater than the load threshold, it is determined that the currently running process is a large task, and the first-type core is started; when the total load of the multi-core processor is not greater than the load threshold, it is determined that the currently running process is a small task, and the second-type core is started, wherein the computing ability of the first-type core is stronger than that of the second-type core.

The technical solutions provided by the embodiments of the present application can calculate the relative load and load threshold of each processing core, and determine the number of the first-type cores that need to be turned on. In some cases, it is not accurate to determine to turn on the first-type core by counting the total load of the multi-core processor, thereby increasing the power consumption. The relative load represents the workload of the processing core relative to the computing ability of the first-type core in a unit time. Thus, it can intuitively reflect whether calling processing core is a task that requires high computing ability, thereby solving the problem in the prior art that determining turning on the first-type cores by counting the total load of the multi-core processor is inaccurate in some situations and high power consumption is caused, and reducing the power consumption of the terminal.

First, a brief introduction to several terms involved in the embodiments of present application is as follow.

Big. LITTLE is a multi-core processor architecture proposed by the British ARM company. The multi-core processor using this architecture includes at least two types of processing cores, namely the first-type core and the second-type core. The computing ability of the first-type core is stronger than that of the second-type core. The first-type core focuses on processing high-load tasks (such as browsing the web, running games, etc.), and the second-type core focuses on processing low-load tasks (such as some tasks running in the background). The terminal can determine the first-type core and/or the second-type core that need to be turned on through the method for scheduling the multi-core processor.

Load is a parameter used to indicate the workload of the processing core in a unit time. Optionally, the load is the ratio of the working time of the processing core in the unit time to the unit time.

Operating frequency is a clock frequency of the processing core. That is, the operating frequency is an abbreviation for the frequency of work (the number of synchronization pulses occurred in 1 second) when the processing core operations. The unit of the operating frequency is Hz, which defines the operation speed of the processing core.

Scheduling is a method for determining to turn on and/or turn off the processing cores of the multi-core processor by the terminal. For example, the multi-core processor has four first-type cores and four second-type cores. If the terminal determines to turn on two first-type cores and three second-type cores, two first-type cores will be in the working state, two second-type cores will be in the dormant state, three second-type cores will be in the working state, and one second-type core will be in the dormant state.

Dhrystone Million Instructions executed Per Second (abbreviation: DMIPS) is the computing ability per unit time of different types of processing cores obtained by testing.

In the related art, the method for scheduling the multi-core processor includes the following operations: the terminal obtains the total load of the multi-core processor, and when the total load of the multi-core processor is greater than the load threshold, it is determined that the currently running process is a large task, and the first-type core is started; When the total load of the multi-core processor is not greater than the load threshold, it is determined that the currently running process is a small task, and the second-type core is started, wherein the computing ability of the first-type core is stronger than that of the second-type core.

In one embodiment, the multi-core processor includes four first-type cores and four second-type cores. The terminal obtains a total load of 200% of four first-type cores and four second-type cores. If the load threshold is 180 %, it is determined that the currently running process in the terminal is a large task, and it is determined that four first-type cores need to be turned on. If the total load of four first-type cores and four second-type cores is 150%, it is determined that the currently running process is a small task, and it is determined that four second-type cores need to be turned on.

Since the total load of the multi-core processor obtained by the terminal reflects the load of multiple running processes in the terminal, when there are multiple small tasks running in the terminal, the total load of the multi-core processor will be higher, and multiple small tasks are misjudged as a large task, so that the first-type processing core is turned on. The terminal only needs to turn on the second-type core that is adapted to the small task, thereby meeting the task requirements. Because the first-type core with higher power consumption is mistakenly turned on, which leads to higher power consumption of the terminal in this case.

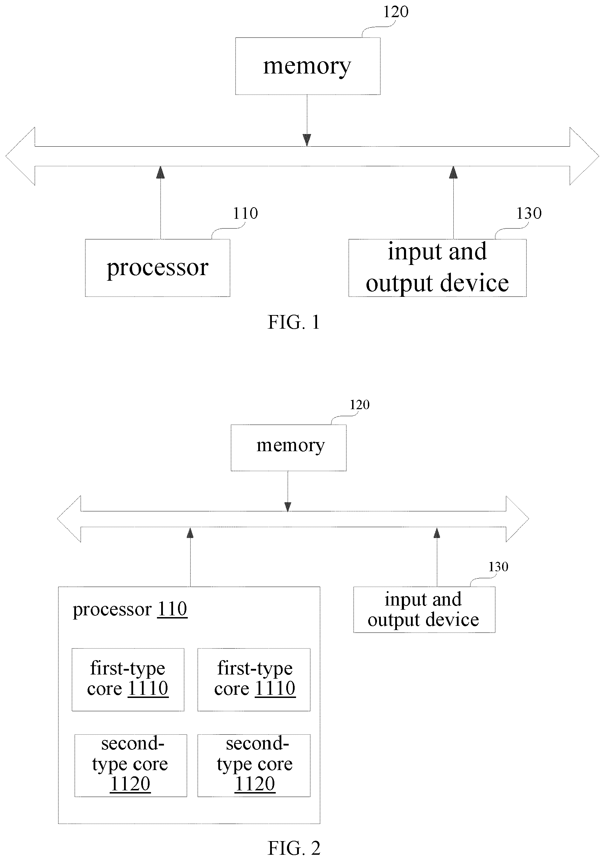

Referring to FIG. 1, which shows a structural block diagram of a terminal provided by one embodiment of the present application. The terminal can be an electronic device, such as a smart phone or a tablet computer. The terminal can include one or more of the following components: a processor 110, a memory 120, and an input and output device 130.

The processor 110 uses various interfaces and lines to connect various parts of the entire terminal, and executes various functions and process data of the terminal by running or executing instructions, programs, code sets, or instruction sets stored in the memory 120, and calling data stored in the memory 120. Optionally, the processor 110 can be implemented in at least one form of hardware in a Digital Signal Processing (DSP), a Field-Programmable Gate Array (FPGA), and a Programmable Logic Array (PLA). The processor 110 can be integrated with one or a combination of a Central Processing Unit (CPU), a Graphics Processing Unit (GPU), and a modem. The CPU mainly processes the operating system, user interface, applications and so on. The GPU is used for rendering and drawing of display content. The modem is used for processing wireless communication. It can be understood that the above-mentioned modem may not be integrated into the processor 110, but may be implemented by a communication chip alone.

As shown in FIG. 2, the processor 110 is the multi-core processor. The multi-core processor includes the first-type core 1110 and the second-type core 1120. The computing ability of the first-type core 1110 is stronger than that of the second-type core 1120. The first-type core 1110 focuses on processing high-load tasks (such as browsing the web, running games, etc.), and the second-type core 1120 focuses on processing low-load tasks (such as some tasks running in the background). The power consumption of the first-type core is greater than that of the second-type core. The terminal can determine the number of the first-type core 1110 and/or the second type 1120 that need to be turned on through the method for scheduling the multi-core processor in the following embodiments.

The memory 120 includes a Random Access Memory (RAM) or a Read-Only Memory. Optionally, the memory 120 includes a non-transitory computer-readable storage medium. The memory 120 can be used to store instructions, programs, codes, code sets or instruction sets. The memory 120 includes a program storage area and a data storage area. The program storage area can store instructions for implementing the operating system, instructions for implementing at least one function (such as touch function, sound playback function, image playback function, etc.), and instructions for implementing the following various method embodiments, etc. The operating system can be a Android system (including the deeply developed system based on the Android system), a IOS system developed by Apple (including the deeply developed system based on the IOS system), or other systems. The data storage area can also store data created by the terminal in use (such as phone book, audio and video data, chat record data), etc.

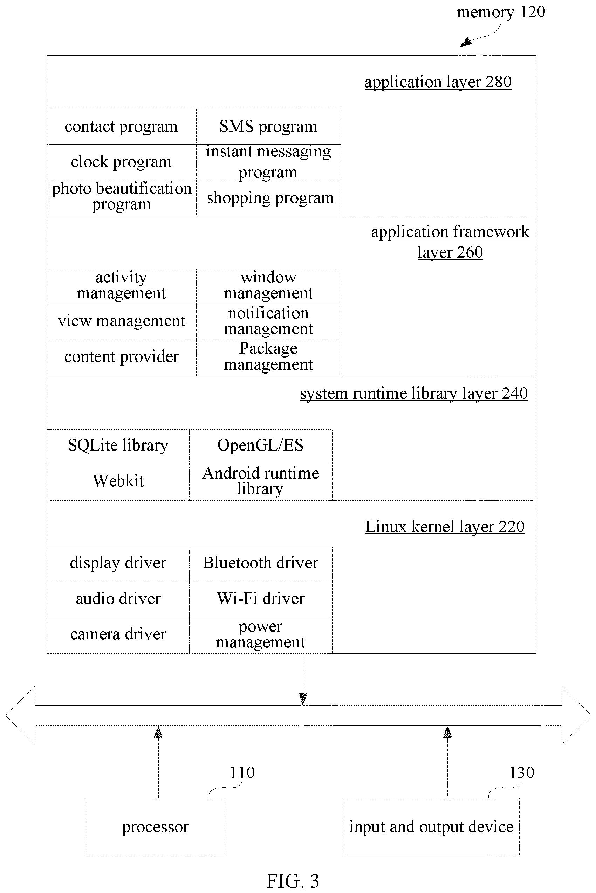

Taking the Android system as an example, the programs and data stored in the memory 120 are shown in FIG. 3. The memory 120 can store a Linux kernel layer 220, a system runtime library layer 240, an application framework layer 260, and an application layer 280. The Linux kernel layer 220, the system runtime library layer 240, and the application framework layer 260 belong to the operating system space, and the application layer 280 belongs to the user space. The Linux kernel layer 220 provides low-level drivers for various hardware of the terminal 100, such as display drivers, audio drivers, camera drivers, Bluetooth drivers, Wi-Fi drivers, power management, and so on. The system runtime library layer 240 provides major feature support for the Android system by some C/C++ libraries. For example, SQLite library provides database support, OpenGL/ES library provides 3D drawing support, Webkit library provides browser kernel support, and so on. The Android runtime is also provided in the system runtime library layer 240, which mainly provides some core libraries. The Android runtime can allow developers to write Android applications in the Java language. The application framework layer 260 provides various APIs that may be used when building applications. Developers can also use these APIs to build their own applications, such as activity management, window management, view management, notification management, content providers, package management, call management, resource management, location management. At least one application is run in the application layer 280. The application can be a native application of the operating system, such as a contact program, a SMS program, a clock program, a camera application, and so on. The applications can be a third-party application developed by a third-party developer, such as a game application, an instant messaging program, a photo beautification program, a shopping program, and so on.

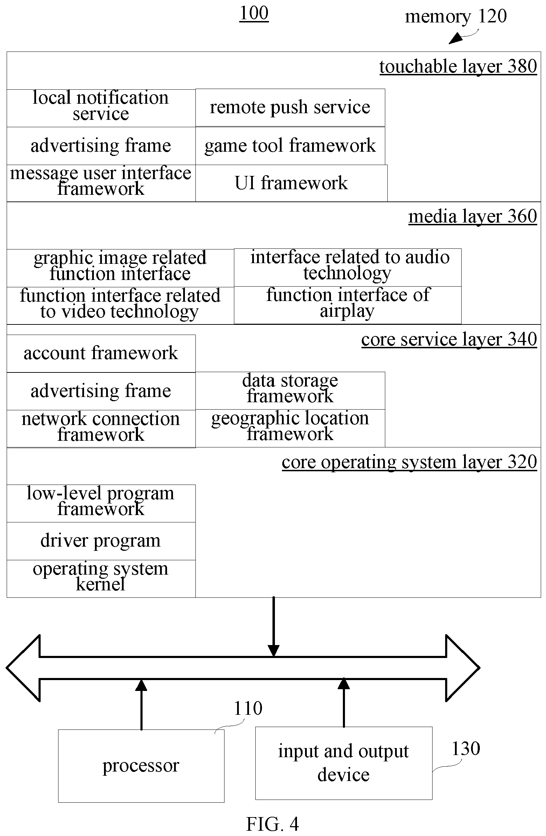

In order to make the application of the application layer interact with the Linux kernel layer, as shown in FIG. 4, the Linux kernel layer 220 provides a series of kernel functions with predetermined functions, which are presented to the application layer 280 in the form of interfaces. Applications of application layer 280 can call kernel functions through this interface, to access hardware devices and other operating system resources. Optionally, the application calls the above-mentioned interface through an applicationming interface (API) of the application framework layer, to access the Linux kernel layer to complete the request of the application.

The input and output device 130 can include a touch display screen. The touch display screen is used to receive a user's touch operation on or near the touch display screen by any suitable object, such as a finger or a touch pen. The touch display screen is also used to display a user interface of each application. The touch display screen is usually located on the front panel of the terminal. The touch display screen can be designed as a full screen, a curved screen or a special-shaped screen. The touch display screen can also be designed as a combination of the full screen and the curved screen, or a combination of the special-shaped screen and the curved screen, which is not limited in the embodiment of the present application.

In addition, one of ordinary skill in the art can understand that the structure of the terminal shown in the above figures does not constitute a limitation on the terminal. The terminal can include more or less components than those shown in the figures, or combine certain components, or different component arrangements. For example, the terminal also includes other components, such as a radio frequency circuit, an input unit, a sensor, an audio circuit, a wireless fidelity (WiFi) module, a power supply, a Bluetooth module, and so on.

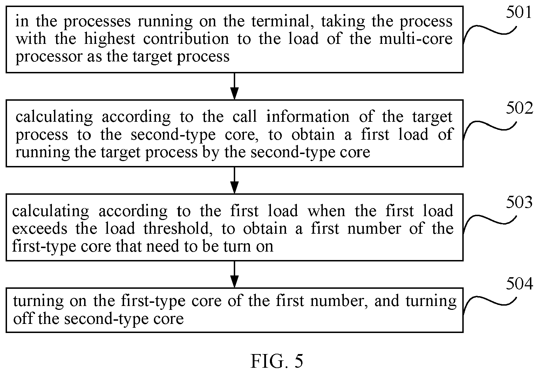

Referring to FIG. 5, FIG. 5 shows a flowchart of the method for scheduling the multi-core processor provided by one embodiment of the present application. The method is executed by a terminal, and the terminal can be the terminal in FIG. 1 to FIG. 4. The method includes the following operations.

Operation 501: in the processes running on the terminal, taking the process with the highest contribution to the load of the multi-core processor as the target process.

The load is used to represent the workload of the processing core in a unit time. Optionally, the load is the ratio of the working time of the processing core per unit time to the unit time. For example, if the unit time is 1 second, and the actual working time of the processing core within 1 second is 0.8 seconds, the load of the processing core is 80%.

The terminal obtains the load contributed by each running process to the multi-core processor, and takes the process with the highest contribution to the load of the multi-core processor as the target process. Optionally, the terminal obtains the load that each process contributes to the multi-core processor by acquiring the call information of each process to the processing core.

Exemplarily, there are process 1, process 2, and process 3 running in the terminal, wherein the load of the terminal is 80% when running process 1, the load of the terminal is 75% when running process 2, and the load of the terminal is 85% when running process 3, the process 3 is determined to be the target process.

Optionally, in a possible embodiment provided in present application, the terminal can implement the operation of determining the target process by executing the following operations (a1) and (a2). Operation (a1) and operation (a2) are introduced as follows:

Operation (a1), reading the preset application identifier.
In the embodiment of the present application, the application identifier is used to specify an application installed in the terminal. Optionally, the application identifier is a name of an installation package of the installed application.
Operation (a2), when the application corresponding to the focus window of the terminal is the application indicated by the application identifier, the process of the application with the highest contribution to the load of the multi-core processor is taken as the target process.

In the embodiment of the present application, the terminal can determine the target process based on the situation of the application corresponding to the focus window. Optionally, when the application corresponding to the focus window is the application indicated by the application identifier, the terminal takes the process of the application with the highest contribution to the load of the multi-core processor as the target process.

Optionally, the terminal can provide priority performance optimization for the application corresponding to the focus window, but if performance optimization is provided for the application corresponding to each focus window, the power consumption of the terminal may in turn increase. Therefore, if the application corresponding to the focus window is the preset application, the terminal will determine the target process in the application, thus the predetermined application can always be scheduled by the multi-core processor, thereby achieving performance optimization.

Optionally, in another possible embodiment provided in present application, the terminal can implement the operation of determining the target process by executing the following operations (b1) and (b2). Operations (b1) and (b2) are introduced as follows:

Operation (b1), acquiring the operating frequency of the application corresponding to the focus window.

In the embodiment of the present application, the operating frequency is used to indicate the number of touch operations received by the focus window within the unit time. For example, when the focus window receives 3 click operations within 1 second, the operating frequency is 3 times/second.

Operation (b2), when the operating frequency is not less than a preset frequency threshold, in the processes of the application corresponding to the focus window, the process with the highest contribution to the load of the multi-core processor is taken as the target process.

In the embodiment of the present application, when the operating frequency is higher than the preset frequency threshold, the target process can be determined by the terminal in the process of the application corresponding to the focus window. The embodiment of present application can execute the process of determining the target process provided by present application when the focus window is frequently operated, thus the multi-core processor provided by the application can be scheduled when the focus window is indeed frequently used, thereby reducing the energy consumption of the terminal under the premise of optimizing the performance of the processor, and balancing the performance and energy consumption of the multi-core processor of the terminal..

Operation 502: calculating according to the call information of the target process to the second-type core, to obtain a first load of running the target process by the second-type core.

Exemplarily, the multi-core processor includes two second-type cores: the second-type core B1 and the second-type core B2. According to the call information of the target process to the second-type core, the terminal determines that the time for calling the second-type core B1 by the target process in the time T is t1, the time for calling the second-type core B2 in time T is t2, the load of the second-type core B1 is calculated as t1/T, and the load of the second-type core B2 is t2/T. Thus, the first load is calculated as (t1/T+t2/T).

Operation 503: calculating according to the first load when the first load exceeds the load threshold, to obtain a first number of the first-type core that need to be turn on.

The terminal detects whether the first load exceeds the load threshold. When the first load exceeds the load threshold, the terminal determines that the target process is a large task, takes the first load as the load that the first-type core needs to bear, and calculates the first number of the first-type core that needs to be turned on.

Optionally, the upper limit of the load of the first-type core is the load threshold, the first load is divided by the load threshold, and the result of operation is rounded up to an integer, to obtain the first number. For example, the first load is 120%, the load threshold is 80%, Ceil (120%/80%)=2, and the first number is 2, wherein Ceil(*) represents * is rounded up to an integer.

Operation 504: turning on the first-type core of the first number, and turning off the second-type core.

After calculating the first number, the terminal turns on the first-type cores of the first number to bear the first load, and turns off the second-type cores.

To sum up, in the embodiment of the present application, by taking the process with the highest load in the processes running in the terminal as the target process, the first load of the second-type core is calculated when the target process is running. When the first load is greater than the load threshold, determining the target process is a large task that first-type core needs to process, thereby turning on the first-type core to bear the first load. The basis for determining the large task is that the first load with the highest load process contributes to the second-type core exceeds the load threshold, thereby solving the problem of determining whether to turn on the first-type core based on the total load of multiple running processes in the related technology is not accurate in some cases, wherein the problem results in high power consumption. Thus, the power consumption of the terminal can be reduced to a certain extent.

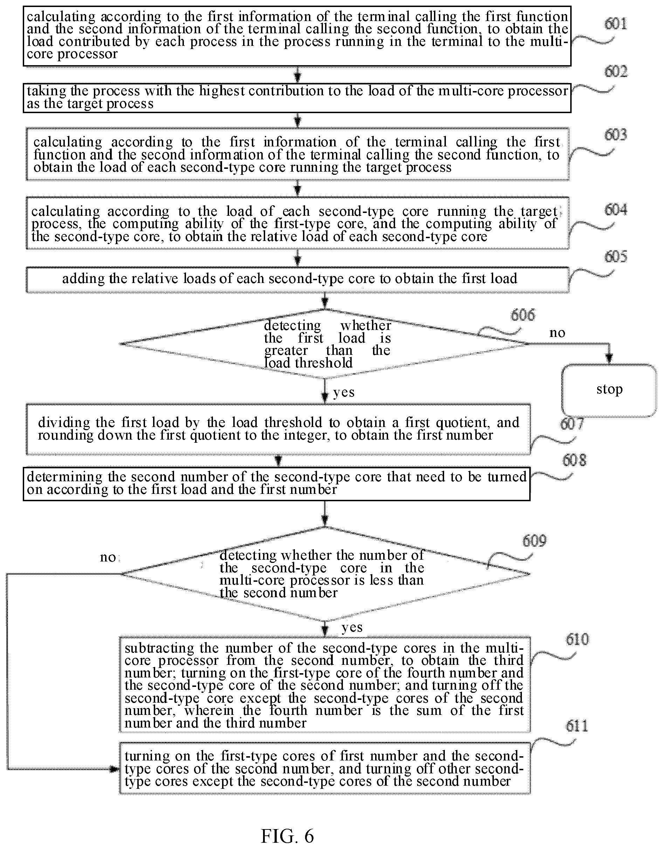

Referring to FIG. 6, FIG. 6 shows a flowchart of the method for scheduling the multi-core processor provided by one embodiment of the present application. The method is executed by the terminal, and the terminal can be the terminal in FIG. 1 to FIG. 4. The method includes the following operations:

Operation 601: calculating according to the first information of the terminal calling the first function and the second information of the terminal calling the second function, to obtain the load contributed by each process in the process running in the terminal to the multi-core processor.

Wherein the first function is used to represent the processing core called by the terminal, and the second function is used to represent the processing core abandoned to call by the terminal. The terminal obtains the calling status of the first function and the second function, thereby obtaining the time and number of times of calling and/or abandoning each processing core in unit time by each process, so as to calculate the load contributed by each process to each processing core, and then calculate the load contributed by each process to the multi-core processor.

Exemplarily, the multi-core processor includes two first-type cores A1 and A2, and two second-type cores B1 and B2. The process 1 and the process 2 are running in the terminal.

According to the first information and the second information, the terminal obtains that the time for the process 1 to call the first-type core A1 within time T is t1, the time for the process 1 to call the first-type core A2 within time T is t2, the time for the process 1 to call the second-type core B1 within time T is t3, and the time for the process 1 to call the second-type core B2 within time T is t4. Thus, when the process 1 is running, the load of the first-type core A1 is t1/T, the load of the first-type core A2 is t2/T, the load of the second-type core B1 is t3/T, and the load of the second-type core B2 is t4/T. Thus, the load contributed by process 1 to the multi-core processor is calculated as (t1/T+t2/T+t3/T+t4/T).

According to the first information and the second information, the terminal obtains that the time for the process 2 to call the first-type core A1 within time T is t5, the time for the process 2 to call the first-type core A2 within time T is t6, and the time for the process 2 to call the second-type core B1 within time T is t7, and the time for the process 2 to call the second-type core B2 within time T is t8. Thus, when the process 2 is running, the load of the first-type core A1 is t5/T, the load of the first-type core A2 is t6/T, the load of the second-type core B1 is t7/T, and the load of the second-type core B2 is t8/T. Thus, the load contributed by the process 2 to the multi-core processor is calculated as (t5/T+t6/T+t7/T+t8/T).

Exemplarily, the first function is the enqueue_task function and the dequeue task function in the struct schedclass of the Linux scheduler. wherein the enqueue_task function is the processing function when the processing core is awakened, and the state becomes operational and is added to the dispatch queue. The dequeue_task function is the function called when the task gives up the right to use the processing core and is removed from the queue. The terminal obtains the calling status of the process running in the terminal to each processing core through the code added on these two functions.

Operation 602, taking the process with the highest contribution to the load of the multi-core processor as the target process.

After the terminal calculates the load that each process contributes to the multi-core processor, it takes the process with the highest contribution to the load of the multi-core processor as the target process. For example, the load contributed by the process 1 to the multi-core processor is (t1/T+t2/T+t3/T+t4/T), and the load contributed by the process 2 to the multi-core processor is (t5/T+t6/T +t7/T+t8/T), if (t1/T+t2/T+t3/T+t4/T)>(t5/T+t6/T+t7/T+t8/T), the process 1 is the target process.

Operation 603: calculating according to the first information of the terminal calling the first function and the second information of the terminal calling the second function, to obtain the load of each second-type core running the target process.

Exemplarily, referring to the embodiment in operation 601, if the process 1 is the target process, the load of the second type core B 1 is t3/T when running the target process, and the load of the second type core B2 is t4/T when running the target process.

Operation 604: calculating according to the load of each second-type core running the target process, the computing ability of the first-type core, and the computing ability of the second-type core, to obtain the relative load of each second-type core.

Wherein the relative load is used to represent the load when the second-type core is equivalent to the computing ability of the first-type core to run the process. For example, the load of the second type core B1 is 80% when running the process 1. Because the computing ability of the first type core is stronger than that of the second type core, the load of the first type core when running the process 1 is lower than that of the second type core, assuming that the second-type core B1 has the computing ability of the first-type core, the load is 40% when running the process 1, and the relative load of the second-type core B1 is 40% when running the process 1.

Optionally, the operation 604 includes but is not limited to the following sub-operations.

Operation a: calculating according to the computing ability of the second-type core, the highest operating frequency of the first-type core, and the highest operating frequency of the second-type core, to obtain the computing ability of the first-type core.

Exemplarily, according to the computing ability of the second-type core, the highest operating frequency of the first-type core, the highest operating frequency of the second-type core, the DMIPS of the first-type core, and the DMIPS of the second-type core, the terminal calculates the computing ability of the first-type core by the following formula:

$$\text{capacity(big)}=C \bullet \frac{\max\_freq(big) \bullet DMIPS(big)}{\max\_freq(small) \bullet DMIPS(small)}$$

wherein, capacity(big) represents the computing ability of the first-type core, C represents the computing ability of the second-type core, max_freq(big) represents the highest operating frequency of the first-type core, DMIPS(big) represents the DMIPS of the first-type core, max_freq(small) represents the highest operating frequency of the second type core, and DMIPS(small) represents the DMIPS of the second type core. Wherein C, max_freq(big), DMIPS(big), max_freq(small) and DMIPS(small) are constants pre-stored in the terminal.

Operation b: for any second-type core in each second-type core, calculating according to the load of the second-type core, the current operating frequency of the second-type core, the highest operating frequency of the second-type core, the computing ability of the second-type core, and the computing ability of the first-type core, to obtain the relative load of the second-type core.

Exemplarily, the terminal calculates the relative load of the processing core according to the following formula:

$$\text{scaled\_load} = \text{load}(core) \bullet \frac{current\_freq(core)}{\max\_freq(core)} \bullet \frac{capacity(core)}{capacity(big)}$$

wherein, scaled load(core) represents the relative load of the processing core, current_freq(core) represents the current operating frequency of the processing core, max_freq(core) represents the highest operating frequency of the processing core, that is, max_freq(core) represents the highest operating frequency of the second-type core, capacity(core) represents the computing ability of the processing core, that is, capacity(core) represents the computing ability of the second-type core.

Operation 605: adding the relative loads of each second-type core to obtain the first load.

Exemplarily, the multi-core processor includes two second-type cores B1 and B2, the relative load of the second-type core B 1 is 50%, and the relative load of the second-type core B2 is 45%, and the calculated first load is (50%+45%)=95%.

Operation 606: detecting whether the first load is greater than the load threshold.

The terminal detects whether the first load is greater than the load threshold. When the first load is greater than the load threshold, the target process is determined as the large task and enters operation 607. When the first load is not greater than the load threshold, the target process is determined as the small task, and the operation stops.

Operation 607: dividing the first load by the load threshold to obtain a first quotient, and rounding down the first quotient to the integer, to obtain the first number.

When the first load is greater than the load threshold, the terminal determines that the target process is the large task, and the first-type core needs to be turned on to undertake part of the first load. The terminal divides the first load by the load threshold to obtain the first quotient, and rounds down the first quotient to the integer, to obtain the first number, and the first number is the number of first-type core that need to be turned on. For example, the first load is 95% and the load threshold is 80%, Floor(95%/80%)=1, and the first number is 1, wherein Floor(*) represents rounding down * to an integer.

Operation 608: determining the second number of the second-type core that need to be turned on according to the first load and the first number.

The terminal multiplies the first number by the load threshold to obtain the second load that the first-type core needs to bear. The second load is subtracted from the first load to obtain the remaining load, and the remaining load is divided by the load threshold to obtain the second quotient. The second quotient is round up to an integer, to obtain the second number of the second-type core that need to be turned on.

Exemplarily, the first load is 95%, the first number of first-type core that needs to be turned on is 1, and the load threshold is 80%, then the second load that the first-type core need to bear is 80%×1=80%. The remaining load is (95%-80%)=15%, then Ceil (15%/80%)=1, and the second number of the second-type cores that need to be turned on is 1.

Operation 609: detecting whether the number of the second-type core in the multi-core processor is less than the second number.

The terminal detects whether the number of the second-type cores in the multi-core processor is less than the second number. When the number of the second-type cores is less than the second number, the operation 610 is entered. When the number of the second-type cores is not less than the second number, the operation 611 is entered.

Operation 610: subtracting the number of the second-type cores in the multi-core processor from the second number, to obtain the third number; turning on the first-type core of a fourth number and the second-type core of the second number; and turning off the second-type core except the second-type cores of the second number, wherein the fourth number is the sum of the first number and the third number.

When the number of the second-type cores in the multi-core processor is less than the second number, the first-type core needs to be scheduled to process the load that the second-type core in the multi-core processor cannot bear. Thus the terminal subtracts the number of the second-type cores in the multi-core processor from the second number, to obtain the third number. The number of first-type cores that needs to be turned on finally is determined as the sum of the first number and the third number., and the sum of the first number and the third number is the fourth number. The number of the second-type cores that needs to be turned on finally is the second number. The terminal turns on the first-type cores of the fourth number, turns on the second-type cores of the second number, and turns off other the second-type cores except the second-type cores of the second number, to complete the scheduling.

Operation 611: turning on the first-type cores of first number and the second-type cores of the second number, and turning off other second-type cores except the second-type cores of the second number.

When the number of the second-type cores in the multi-core processor is not less than the second number, the second-type cores in the multi-core processor can bear the remaining load. The terminal turns on the first-type cores of the first number and the second-type cores of the second number, and turns off other second-type cores except the second-type cores of the second number, to complete scheduling.

To sum up, in the embodiment of the present application, according to taking the process with the highest load in the processes running in the terminal as the target process, the first load of the second-type core is calculated when running the target process. When the first load is greater than the load threshold, the target process is determined as the large task, the first-type core is turned on to bear the first load. Because the basis for determining the large task is that the first load contributed by the highest load process to the second-type core exceeds the load threshold, the problem of high power consumption is solved, thereby reducing the power consumption of the terminal to a certain extent. In related technology, the determination of whether to turn on the first-type core based on the total load of multiple running processes is inaccurate in some situations, which leads to the problem of high power consumption.

Optionally, in the embodiment of the present application, the relative load of each second-type core is calculated according to the load of each second-type core, and the first load borne by the second-type core is calculated according to the relative load. Thus, according to the first load, whether to turn on the first-type core and the first number of the first-type cores that need to be turned on are determined. The relative load is the load when the second-type core is equivalent to the computing ability of the first-type core, thus the first load obtained according to the relative load can more accurately calculate the first number of the first-type cores that need to be turned on, which improves the accuracy of the method for scheduling the multi-core processor.

Optionally, in the embodiment of the present application, the remaining load to be borne by the second-type core is obtained by subtracting the second load to be borne by the first-type core from the first load, thereby determining the second load that needs to be turned on according to the remaining load and the load threshold. Because it is not necessary to turn on the first-type core to bear all the first load, most of the load in the first load is borne by the first type cores, and the remaining load is borne by the second type cores, which reduces the power consumption of the terminal to a certain extent.

Optionally, in the embodiment of the present application, when the number of the second-type cores that needs to be turned on exceeds the number of the second-type cores in the multi-core processor, the corresponding first-type core are turned on to adapt to the remaining load, thereby avoiding the problem of uneven running when the number of processing cores turned on is not enough to adapt to the load of the target process, thereby improving the running smoothness of the terminal.

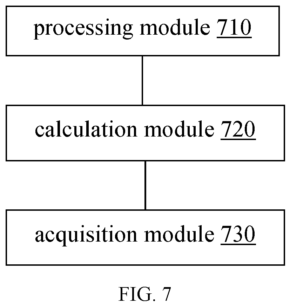

Referring to FIG. 7, FIG. 7 shows a structural block diagram of a device for acquiring the main tone of an image provided by an exemplary embodiment of the present application. The device can be implemented as the terminal in the embodiments of FIGS. 1 to 4 through a software, a hardware or a combination of the software and the hardware. The device includes a processing module 710, a calculation module 720, and an acquisition module 730.

The processing module 710 is configured to take the process of the processes running on the terminal with the highest contribution to the load of the multi-core processor as the target process.

The calculation module 720 is configured to calculate the first load of the second-type core when running the target process, according to the call information of the target process to the second-type core. When the first load exceeds the load threshold, the first number of the first-type cores that need to be turned on is calculated according to the first load.

The processing module 710 is further configured to turn on the first-type cores of the first number.

In an alternative embodiment, the calculation module 720 is further configured to calculate the load of each second-type core according to the call information; calculate the relative load of each second-type core according to the load of each second-type core, the computing ability of the first-type core, and the computing ability of the second-type core; and add the relative load of each second-type core to obtain the first load. Wherein the relative load is used to represent the load when the second-type core is equivalent to the computing ability of the first-type core to run the process.

In an alternative embodiment, the calculation module 720 is further configured to divide the first load by the load threshold to obtain the first quotient, and round up the first quotient to an integer to obtain the first number.

In an alternative embodiment, the calculation module 720 is further configured to divide the first load by the load threshold to obtain the first quotient, and round down the first quotient to an integer to obtain the first number; multiply the first number by the load threshold to get the second load that the first-type core needs to bear; subtract the second load from the first load to get the remaining load; divide the remaining load by the load threshold to get the second quotient, and round up the second quotient to an integer, to obtain the second number of the second-type cores that need to be turned on.

The processing module 710 is further configured to turn on the second-type cores of the second number.

The shutdown module is used to turn off other second-type cores except the second-type cores of the second number.

In an optional embodiment, the calculation module 720 is further configured to subtract the number of the second-type cores in the multi-core processor from the second number when the number of the second-type cores in the multi-core processor is less than the second number, to obtain the third number.

The processing module 710 is further configured to turn on the first-type cores of the third number.

In an optional embodiment, the acquisition module 730 is configured to obtain the first information of the terminal calling the first function, and the second information of the terminal calling the second function, to determine the time of the target process calling each second type core. The first function is used to represent the processing core called by the terminal, and the second function is used to represent the processing core abandoned to call by the terminal.

The calculation module 720 is further configured to calculate the load of each second-type core according to the time of the target process calling each second-type core.

The calculation module 720 is further used to calculate the computing ability of the first-type core, according to the computing ability of the second-type core, the highest operating frequency of the first-type core, and the highest operating frequency of the second-type core. For any second-type core in each second-type core, the calculation module 720 is also used to calculate the relative load of the second-type core, according to the load of the second-type core, the current operating frequency of the second-type core, the highest operating frequency of the second-type core, the computing ability of the second-type core, and the computing ability of the first-type core.

In an optional embodiment, the processing module 710 is configured to read a preset application identifier, and the application identifier is used to specify an application installed in the terminal. When the application corresponding to the focus window of the terminal is the application indicated by the application identifier, the process of the application with the highest contribution to the load of the multi-core processor is taken as the target process.

In an optional embodiment, the processing module 710 is configured to obtain the operating frequency of the application corresponding to the focus window, and the operating frequency is used to represent the number of touch operations received by the focus window within the unit time. When the operating frequency is not less than the preset frequency threshold, in the processes of the application corresponding to the focus window, the process with the highest contribution to the load of the multi-core processor is taken as the target process.

The present application also provides a computer-readable storage medium in which at least one instruction, at least one program, code set or instruction set is stored. The at least one instruction, the at least one program, the code set or the instruction set is loaded and executed by the processor to implement the method for scheduling the multi-core processor provided in the foregoing method embodiment.

Optionally, the present application also provides a computer program product containing instructions. When the computer program product is run on a computer, the computer executes the method for scheduling the multi-core processor described in the foregoing aspects.

It should be understood that the "multiple" mentioned herein refers to two or more. The "and/or" describes the association relationship of the associated objects, indicating that there can be three types of relationships, for example, A and/or B, which can mean: A alone exists, A and B exist at the same time, and B exists alone. The character "/" generally indicates that the associated objects are in an "or" relationship.

The serial numbers of the foregoing embodiments of the present application are only for description, and do not represent the advantages and disadvantages of the embodiments.

Those of ordinary skill in the art can understand that all or part of the operations in the foregoing embodiments can be implemented by a hardware, or by a program instructing related hardware to be completed. The program can be stored in a computer-readable storage medium. The storage medium mentioned can be a read-only memory, a magnetic disk or an optical disk, etc.

The above descriptions are only preferred embodiments of present application, and are not intended to limit present application. Any modification, equivalent replacement, improvement, etc. made within the spirit and principle of present application should be included in the protection scope of present application.

**Claims**

1. A method for scheduling a multi-core processor, wherein the method is executed by a terminal, the terminal comprises the multi-core processor, the multi-core processor comprises at least two processing cores, and each processing core comprises a first-type core and a second-type core, a computing ability of the first-type core is stronger than the first-type core, at least one process is run in the terminal, and the method comprises:

    taking the process with the highest contribution to a load of the multi-core processor as a target process;
    calculating according to an information for calling the second-type core by the target process, to obtain a first load of the second-type core when running the target process;
    calculating according to the first load, to obtain a first number of the first-type cores that need to be turned on, when the first load exceeds a load threshold; and
    turning on the first-type cores of the first number, and turning off the second-type core.

2. The method according to claim 1, wherein the operation of calculating according to the information for calling the second-type core by the target process, to obtain the first load of the second-type core when running the target process comprises:

> calculating according to the information, to obtain a load of each second-type core;
> calculating according to the load of each second-type core, the computing ability of the first-type core, and a computing ability of the second-type core, to obtain a relative load of each second-type core; wherein the relative load is used to represent a load of the second-type core that is equivalent to the computing ability of the first-type core to run the at least one process; and
> adding the relative load of each second-type core, to obtain the first load.

3. The method according to claim 1 or 2, wherein the operation of calculating according to the first load to obtain the first number of the first-type core that need to be turned on comprises:
dividing the first load by the load threshold to obtain a first quotient, and rounding up the first quotient to an integer, to obtain the first number.

4. The method according to claim 1 or 2, wherein the operation of calculating according to the first load to obtain the first number of the first-type core that need to be turned on comprises:

> dividing the first load by the load threshold to obtain a first quotient, and rounding down the first quotient to an integer, to obtain the first number;
> multiplying the first number by the load threshold to obtain a second load that the first-type core needs to bear;
> subtracting the second load from the first load to obtain a remaining load;
> dividing the remaining load by the load threshold to obtain a second quotient, and rounding up the second quotient to an integer, to obtain a second number of the second-type core that needs to be turned on;
> the turning on the first-type core of the first number and turning off the second-type core further comprises:
> turning on the second-type core of the second number, and turning off other second-type cores except the second-type core of the second number.

5. The method according to claim 4, after the turning on the first-type core of the first number, further comprising:

> subtracting the number of the second-type core in the multi-core processor from the second number to obtain a third number, when the number of the second-type core in the multi-core processor is less than the second number; and
> turning on the first-type core of the third number.

6. The method according to any one of claims 2 to 5, wherein the operation of calculating according to the information to obtain the load of each second-type core comprises:

> acquiring a first information for calling a first function by the terminal and a second information for calling a second function by the terminal, to determine a time for calling each second-type core by the target process; wherein the first function is used to represent the processing core called by the terminal, and the second function is used to represent the processing core abandoned to call by the terminal; and
> calculating according to the time for calling each second-type core by the target process, to obtain the load of each second-type core.

7. The method according to claim 2, wherein the operation of calculating according to the load of each second-type core, the computing ability of the first-type core, and the computing ability of the second-type core, to obtain the relative load of each second-type core comprises:

> calculating according to the computing ability of the second-type core, the highest operating frequency of the first-type core, and the highest operating frequency of the second-type core, to obtain the computing ability of the first-type core; and
> for any second-type core in each second-type core, calculating according to the load of the second-type core, a current operating frequency of the second-type core, the highest operating frequency of the second-type core, the computing ability of the second-type core, and the computing ability of the first-type core, to obtain the relative load of the second-type core.

8. The method according to claim 1, wherein the operation of taking the process with the highest contribution to the load of the multi-core processor as the target process comprises:

reading a preset application identifier, wherein the application identifier is used to specify an application installed in the terminal; and
taking a process of the application with the highest contribution to the load of the multi-core processor as the target process, when the application corresponding to the focus window of the terminal is the application indicated by the application identifier.

9. The method according to claim 1, wherein the operation of taking the process with the highest contribution to the load of the multi-core processor as the target process comprises:

acquiring an operating frequency of an application corresponding to a focus window, wherein the operating frequency is used to represent the number of touch operations received by the focus window within a unit time; and
taking a process of the processes of the application corresponding to the focus window with the highest contribution to the load of the multi-core processor as the target process, when the operating frequency is not less than a preset frequency threshold.

10. A device for scheduling a multi-core processor, wherein the device is applied to a terminal, the terminal comprises a multi-core processor, the multi-core processor comprises at least two processing cores, and each processing core comprises a first-type core and a second-type core, a computing ability of the first-type core is stronger than that of the first-type core, at least one process is run in the terminal, and the device comprising:

a processing module configured to taking a process with the highest contribution to the load of the multi-core processor as a target process; wherein the processing module is further configured to turn on the first-type core of the first number and turn off the second-type core; and
a calculation module configured to calculate according to an information for calling the second-type core by the target process to obtain a first load of the second-type core when running the target process; and calculate according to the first load to obtain a first number of the first-type core that need to be turned on, when the first load exceeds a load threshold.

11. The device according to claim 10, wherein the calculation module is configured to calculate according to the information to obtain a load of each second-type core; calculate a relative load of each second-type core according to the load of each second-type core, the computing ability of the first-type core, and a computing ability of the second-type core, wherein the relative load is used to represent a load of the second-type core that is equivalent to the computing ability of the first-type core to run the at least one process; and add the relative load of each second-type core to obtain the first load.

12. The device according to claim 10 or 11, wherein the calculation module is configured to divide the first load by the load threshold to obtain a first quotient, and round up the first quotient to an integer, to obtain the first number.

13. The device according to claim 10 or 11, wherein the device further comprises a shutdown module;
the calculation module is configured to divide the first load by the load threshold to obtain the first quotient, and round down the first quotient to an integer to obtain the first number; multiply the first number by the load threshold to obtain the second load borne by first-type core; subtract the second load from the first load to obtain a remaining load; divide the remaining load by the load threshold to obtain a second quotient, and round up the second quotient to an integer, to obtain a second number of the second-type cores that need to be turned on;
the processing module is configured to turn on the second-type cores of the second number; and
the shutdown module is used to turn off other second-type cores except the second-type cores of the second number.

14. The device of claim 13, wherein:

the calculation module is configured to subtract the number of the second-type cores in the multi-core processor from the second number when the number of the second-type cores in the multi-core processor is less than the second number, to obtain a third number; and
the processing module is configured to turn on the first-type core of the third number.

15. The device according to any one of claims 11 to 14, wherein the device further comprises an acquisition module;

the acquisition module is configured to acquire a first information for calling a first function by the terminal, and a second information for calling a second function by the terminal, to determine a time for calling each second type core by the target process; wherein the first function is used to represent the processing core called by the terminal, and the second function is used to represent the processing core abandoned to call by the terminal; and

the calculation module is configured to calculate the load of each second-type core according to the time for calling each second-type core by the target process.

16. The device according to claim 11, wherein the calculation module is configured for:

calculating according to the computing ability of the second-type core, the highest operating frequency of the first-type core, and the highest operating frequency of the second-type core, to obtain the computing ability of the first-type core; and

for any second-type core in each second-type core, calculating according to the load of the second-type core, a current operating frequency of the second-type core, the highest operating frequency of the second-type core, the computing ability of the second-type core, and the computing ability of the first-type core, to obtain the relative load of the second-type core.

17. The device according to claim 10, wherein the processing module is configured for:

reading a preset application identifier, wherein the application identifier is used to specify an application installed in the terminal; and

taking a process of the application with the highest contribution to the load of the multi-core processor as the target process, when the application corresponding to the focus window of the terminal is the application indicated by the application identifier.

18. The device according to claim 10, wherein the processing module is configured for:

acquiring an operating frequency of an application corresponding to a focus window, wherein the operating frequency is used to represent the number of touch operations received by the focus window within a unit time; and

taking a process of the processes of the application corresponding to the focus window with the highest contribution to the load of the multi-core processor as the target process, when the operating frequency is not less than a preset frequency threshold.

19. A terminal, comprising:

a processor; and

a memory, wherein at least one instruction is stored in the memory, and the at least one instruction is used to be executed by the processor to implement the method for scheduling the multi-core processor of any one of claims 1 to 9.

20. A computer-readable storage medium storing at least one instruction, wherein the at least one instruction is used to be executed by a processor to implement the method for scheduling the multi-core processor of any one of claims 1 to 9.

120

memory

110

processor

130

input and
output device

FIG. 1

120

memory

130

input and
output device

processor 110

first-type
core 1110

first-type
core 1110

second-
type core
1120

second-
type core
1120

FIG. 2

memory 120

| | | application layer 280 |
|---|---|---|
| contact program | SMS program | |
| clock program | instant messaging program | |
| photo beautification program | shopping program | |
| | | application framework layer 260 |
| activity management | window management | |
| view management | notification management | |
| content provider | Package management | |
| | | system runtime library layer 240 |
| SQLite library | OpenGL/ES | |
| Webkit | Android runtime library | |
| | | Linux kernel layer 220 |
| display driver | Bluetooth driver | |
| audio driver | Wi-Fi driver | |
| camera driver | power management | |

110

130

processor

input and output device

FIG. 3

100                                    memory 120

| touchable layer 380 | | |
| --- | --- | --- |
| local notification service | remote push service | |
| advertising frame | game tool framework | |
| message user interface framework | UI framework | |

| media layer 360 | |
| --- | --- |
| graphic image related function interface | interface related to audio technology |
| function interface related to video technology | function interface of airplay |

| core service layer 340 | |
| --- | --- |
| account framework | |
| advertising frame | data storage framework |
| network connection framework | geographic location framework |

| core operating system layer 320 |
| --- |
| low-level program framework |
| driver program |
| operating system kernel |

110

processor

input and output device    130

FIG. 4

in the processes running on the terminal, taking the process with the highest contribution to the load of the multi-core processor as the target process — 501

calculating according to the call information of the target process to the second-type core, to obtain a first load of running the target process by the second-type core — 502

calculating according to the first load when the first load exceeds the load threshold, to obtain a first number of the first-type core that need to be turn on — 503

turning on the first-type core of the first number, and turning off the second-type core — 504

FIG. 5

calculating according to the first information of the terminal calling the first function and the second information of the terminal calling the second function, to obtain the load contributed by each process in the process running in the terminal to the multi-core processor — 601

↓

taking the process with the highest contribution to the load of the multi-core processor as the target process — 602

↓

calculating according to the first information of the terminal calling the first function and the second information of the terminal calling the second function, to obtain the load of each second-type core running the target process — 603

↓

calculating according to the load of each second-type core running the target process, the computing ability of the first-type core, and the computing ability of the second-type core, to obtain the relative load of each second-type core — 604

↓

adding the relative loads of each second-type core to obtain the first load — 605

↓

detecting whether the first load is greater than the load threshold — 606 → no → stop

↓ yes

dividing the first load by the load threshold to obtain a first quotient, and rounding down the first quotient to the integer, to obtain the first number — 607

↓

determining the second number of the second-type core that need to be turned on according to the first load and the first number — 608

↓

detecting whether the number of the second-type core in the multi-core processor is less than the second number — 609 → no

↓ yes

subtracting the number of the second-type cores in the multi-core processor from the second number, to obtain the third number; turning on the first-type core of the fourth number and the second-type core of the second number; and turning off the second-type core except the second-type cores of the second number, wherein the fourth number is the sum of the first number and the third number — 610

↓

turning on the first-type cores of first number and the second-type cores of the second number, and turning off other second-type cores except the second-type cores of the second number — 611

FIG. 6

processing module 710

calculation module 720

acquisition module 730

FIG. 7

## INTERNATIONAL SEARCH REPORT

| | |
|---|---|
| International application No. | |
| | **PCT/CN2019/095996** |

### A. CLASSIFICATION OF SUBJECT MATTER

G06F 9/46(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

DWPI; CNABS; CNTXT; SIPOABS; CNKI: 多核, 多处理器, 调度, 负载, 性能, 分配, 卸载, 迁移, 阈值, multi-core, processor, schedule, load, performance, assign, unload, migrate, threshold

### C. DOCUMENTS CONSIDERED TO BE RELEVANT

| Category* | Citation of document, with indication, where appropriate, of the relevant passages | Relevant to claim No. |
|---|---|---|
| Y | CN 104572272 A (HANGZHOU HUAWEI DIGITAL TECHNOLOGY CO., LTD.) 29 April 2015 (2015-04-29)<br>  description, paragraphs [0046]-[0103] | 1-5, 10-14, 19, 20 |
| Y | CN 102707996 A (JIANGSU LEMOTE TECHNOLOGY CORPORATION LIMITED) 03 October 2012 (2012-10-03)<br>  claim 1 | 1-5, 10-14, 19, 20 |
| A | CN 104572272 A (HANGZHOU HUAWEI DIGITAL TECHNOLOGY CO., LTD.) 03 April 2013 (2013-04-03)<br>  entire document | 6-9, 15-18 |
| A | CN 102707996 A (JIANGSU LEMOTE TECHNOLOGY CORPORATION LIMITED) 03 October 2012 (2012-10-03)<br>  entire document | 6-9, 15-18 |
| A | CN 103019856 A (SHANGHAI GBCOM COMMUNICATION TECHNOLOGY CO., LTD.) 03 April 2013 (2013-04-03)<br>  entire document | 1-20 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 October 2019** | **22 October 2019** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/095996**

| Patent document cited in search report | | | Publication date (day/month/year) | Patent family member(s) | | | Publication date (day/month/year) |
|---|---|---|---|---|---|---|---|
| CN | 104572272 | A | 29 April 2015 | CN | 104572272 | B | 09 February 2018 |
| | | | | WO | 2015051685 | A1 | 16 April 2015 |
| CN | 102707996 | A | 03 October 2012 | None | | | |
| CN | 103019856 | A | 03 April 2013 | None | | | |

Form PCT/ISA/210 (patent family annex) (January 2015)

**EP 3 846 027 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811147261